# EUROPEAN PATENT APPLICATION

(11) **EP 1 584 581 A1**
(43) Date of publication of application: **12.10.2005**
(21) Application number: 05006780.0
(22) Date of filing: 29.03.2005
(51) Int. Cl.: B65G 65/46, B65B 1/12, G01F 13/00

(54) **Device for batching powder materials**

(30) Priority: 31.03.2004 IT BO20040181
(71) Applicant: MARCHESINI GROUP S.p.A., 40065 Pianoro (Bologna) (IT)
(72) Inventor: Monti, Giuseppe, 40065 Pianoro (Bologna) (IT)
(74) Representative: Dall'Olio, Giancarlo

(57) **Abstract**

Device for batching powder materials including an Archimedean screw batching member (3), arranged inside a batching channel (4) and coaxial therewith, and operated to rotate, by relative activating means (8), to convey batched quantities of a powder material (2) to the batching channel (4) outlet section (10).

An additional Archimedean screw batching member (13) is arranged inside the feeding channel (12) and coaxial therewith.

The feeding channel (12) is set in communication with the batching channel (4).

The additional Archimedean screw batching member (13) is operated to rotate, by relative activating means (14), to feed the powder material (2) to the batching member (3).

## Description

The present invention relates to a device for batching powder materials.

It is known that, in order to batch powder materials, different types of devices are used, in particular volumetric devices, having an Archimedean screw batching member.

The Archimedean screw batching member is arranged coaxial with the inside of a batching channel and is operated into rotation by relative activating means, in order to supply batched quantities of powder material to the channel outlet section.

The powder material is fed to the Archimedean screw batching member directly from a hopper set in communication with the batching channel and coaxial therewith.

In general, the axis of the device is arranged to be vertical and consequently, the powder material flows from the hopper to the batching channel due to the gravity, it is batched and then conveyed by the Archimedean screw batching member.

However, these devices are not completely reliable, in particular if it is necessary to batch powder materials, whose particles have a certain cohesion capacity.

Actually, these types of materials tend to aggregate, thus making the flow of material along the batching channel difficult and anyway, discontinuous, causing the so-called "cavitation effect".

In practice, the quantity of powder material, which goes down along the batching channel does not keep constant, but it is interrupted by gaps, which make the batching performed by the Archimedean screw batching member unreliable, because imprecise and not constant in time, especially at high speeds.

The above drawbacks are limited in the known batching devices, by including stirring means, situated in the region corresponding to the feeding hopper, upstream of the batching channel, and operated to stir the powder material in order to prevent the particles from aggregating and causing the undesired cavitation effect.

However, these devices are not wholly efficient for the scope of a reliable batching of a powder material, because the stirring means act casually on only one part of the powder material, inside the feeding hopper, and thus they do not assure a continuous and constant distribution of the material along the helixes of the Archimedean screw batching member.

The object of the present invention is to solve the above mentioned problem, by proposing a device for batching powder materials, which allows feeding of the powder material to the Archimedean screw batching member constantly and continuously, avoiding the reported cavitation effect.

Within the above object, another object of the present invention is to propose a device for batching powder material, whose concept is simple, operation reliable and use versatile.

The above mentioned objects are obtained, in accordance with the contents of the claims, by the device for batching powder materials including an Archimedean screw batching member, arranged inside a batching channel and coaxial therewith, and operated into rotation, by relative activating means, to convey batched quantities of a powder material to the batching channel outlet section, characterized in that it includes a feeding channel, set in communication with the batching channel, and an additional Archimedean screw member, arranged inside the feeding channel and coaxial therewith, and operated to rotate, by relative activating means, to feed the powder material to the Archimedean screw batching member.

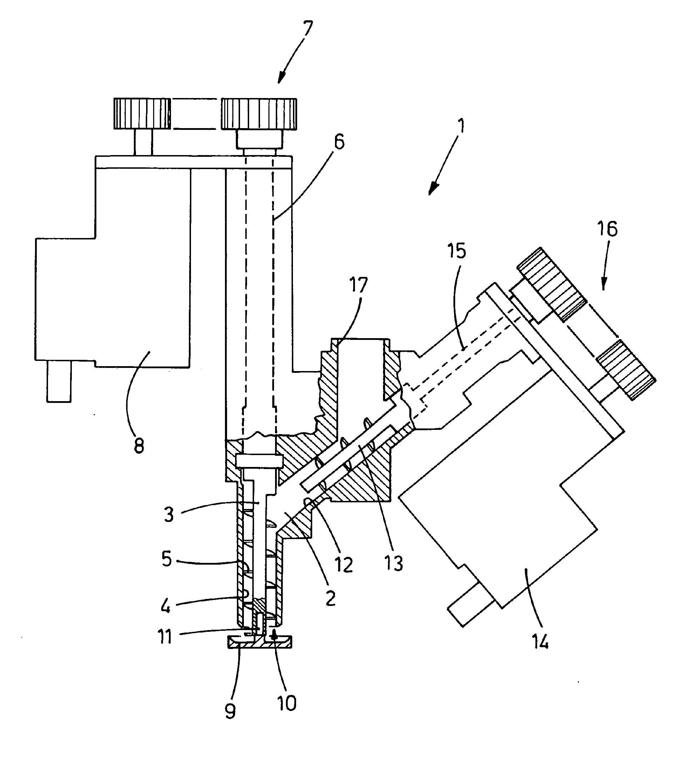

The characteristic features of the invention are pointed out in the following, with particular reference to the enclosed drawings, in which:
- the only Figure is a section view, taken along a vertical medium plane, of the device proposed by the present invention.

With particular reference to the above Figure, the reference numeral 1 indicates the device for batching powder material 2, which is fed to an Archimedean screw batching member 3 of known type, arranged inside a batching channel 4, coaxial therewith.

The Archimedean screw batching member 3 forms a helix 5, which has a fixed or variable step, in relation to the type of batching to perform, and which is arranged preferably with its axis vertical.

The top of the Archimedean screw batching member 3 is fastened to a shaft 6, which is operated to rotate, by an actuator 8 through gear transmission means 7.

At the top of the helix 5 of the Archimedean screw batching member 3, the batching channel 4 is set in communication with a feeding channel 12, which feeds the powder material 2 to the Archimedean screw batching member 3.

The feeding channel 12 is arranged with its axis inclined with respect to the axis of the batching channel 4 at an angle equal to or smaller than 90°, in the shown case, at 45°.

An additional Archimedean screw batching member 13 is introduced into the channel 12, coaxial therewith and operated to rotate by an actuator 14.

In particular, the additional Archimedean screw batching member 13 is fixed coaxial, at its end, to a shaft 15, connected to the actuator 14 by gear transmission means 16.

The opposite end of the additional Archimedean screw batching member 13 is situated near the section, in which the feeding channel 12 joins the batching channel 4.

A hopper for feeding powder material 2, preferably with its axis vertical, not shown in the Figure for sake of clarity, is connected with the feeding channel 12, by a flange fastening element 17.

A collecting terminal plate 9 is fastened to the lower end of the Archimedean screw batching member 3 for collecting the powder material 2, when it is needed to prevent the fall of the latter below, for example during the interval between one batching and the subsequent one.

In particular, the collecting plate 9 has substantially a shape of a disc, whose diameter is bigger than the outlet section 10 of the batching channel 4, and which is fastened to the axis of the Archimedean screw batching member 3 by a central threaded pin 11.

The surface of the collecting plate 9 turned toward the outlet section 10 of the batching channel 4 has advantageously a light concavity, so as to shape a kind of receptacle for the powder material 2 in cases, in which it is needed to avoid the falling of the latter on the area below the plate 9.

The working of the device for batching powder material is described in the following.

The powder material 2, fed in known way to the feeding hopper, reaches the feeding channel 12, in correspondence to which it is continuously pushed by the additional Archimedean screw batching member 13 toward the batching channel 4.

Thus, the Archimedean screw batching member 3 receives the powder material coming from the feeding channel 12 and transfers it, due to the effect of the rotation activated by the respective activator 8, up to the outlet section 10 of the batching channel 4 in batched quantities.

The device for batching powder materials fulfills the object to batch the powder materials in an efficient and precise way.

This result is due first of all to the fact that the powder material 2 is positively fed continuously to the Archimedean screw batching member 3, thus avoiding the forming of empty spaces or gaps inside the batching channel 4 and consequently, the occurring of the cavitation effect.

Moreover, the additional Archimedean screw batching member 13 is much more efficient than the traditional devices for reducing the cavitation effect.

Actually, the stirrers used in the known devices act in a completely random way on the material to batch, while the additional Archimedean screw batching member 13 acts, in accordance with an intended way, on the whole quantity, which is then fed to the Archimedean screw batching member 3.

The described device 1 allows selection of the desired degree of compactness of the batched powder, thus changing the weight of the batched quantity for the same volume; in order to obtain this, it is enough to adjust suitably the speed of the actuators 8, 14, in particular increasing the speed of the actuator 14 of the additional Archimedean screw batching member 13 with respect to the actuator 8 of the batching member 3, to increase the compactness and vice-versa.

Another advantage of the invention lies in the constructive simplicity of the proposed device, including mechanical components, which are easily available and realized.

Finally, the device for batching powder materials is made in such a way, as to facilitate the operations of cleaning, substitution of parts or of the material to batch.

In particular, it is possible to prepare separately the feeding group containing the material to batch and then apply it to the Archimedean screw batching member 3, after the necessary cleaning operations of the latter have been completed.

## Claims

1. Device for batching powder materials including an Archimedean screw batching member (3), arranged inside a batching channel (4) and coaxial therewith, and operated to rotate, by relative activating means (8), so as to convey batched quantities of a powder material (2) to the batching channel (4) outlet section (10), **characterized in that** it includes a feeding channel (12), set in communication with said batching channel (4), and an additional Archimedean screw member (13), arranged inside the feeding channel and coaxial therewith, and operated to rotate, by relative activating means (14), to feed said powder material (2) to said Archimedean screw batching member (3).

2. Device, as claimed in claim 1, **characterized in that** said feeding channel (12) has a fastening element (17) for a hopper feeding said powder material (2) to said additional Archimedean screw batching member (13).

3. Device, as claimed in claim 1 or 2, **characterized in that** the axis of said feeding channel (12) is inclined with respect to the axis of said batching channel (4).

4. Device, as claimed in claim 3, **characterized in that** the axis of said feeding channel (12) is inclined by about 45° with respect to the axis of said batching channel (4).

5. Device, as claimed in one of the previous claims, **characterized in that** the axis of said batching channel (4) is substantially vertical.

6. Device, as claimed in one of the previous claims, **characterized in that** said feeding channel (12) joins said batching channel (4) at a region corresponding to the upper part of the helix (5) of said Archimedean screw batching member (3).

7. Device, as claimed in one or more of the previous claims, **characterized in that** said Archimedean screw batching member (3) and said additional Archimedean screw batching member (13) are fastened at their tops to the relative shafts (6, 15), which are operated to rotate by respective actuators (8, 14) through gear transmission means (7, 16).

8. Device, as claimed in one or more of the previous claims, **characterized in that** said Archimedean screw batching member (3) carries, fastened to an end going out of said batching channel (4), a collecting plate (9), which forms a concave surface for collecting said powder material (2) leaving said batching channel (4).
